# EUROPÄISCHE PATENTANMELDUNG

(11) **EP 0 589 160 A1**
(43) Veröffentlichungstag der Anmeldung: **30.03.1994**
(21) Anmeldenummer: 93111047.2
(22) Anmeldetag: 09.07.1993
(51) Int. Cl.: B24B 47/22, B24B 19/00, B24B 9/06, B24B 41/00, B23Q 15/24

(54) **Verfahren und Anlage zum Entgraten und Weiterbearbeiten von Werkstücken, insbesondere aus keramischem Material**

(30) Priorität: 10.07.1992 DE 4222790
(71) Anmelder: Erich Netzsch GmbH & Co. Holding KG, D-95100 Selb (DE)
(72) Erfinder: Sack, Karlheinz, D-95100 Selb (DE); Maslowski, Heinz-Jürgen, D-8672 Selb-Plössberg (DE)
(74) Vertreter: Goetz, Rupert, Dipl.-Ing.

(57) **Zusammenfassung**

In einer Justierstation (20) zum Grobjustieren jeweils eines Werkstücks (10) ist ein Sensor zum Abtasten einer einen Grat einschließenden Rohkontur des Werkstücks (10) angeordnet. Auf die Justierstation (20) folgt eine erste Bearbeitungsstation (50), in der eine Aufspannvorrichtung (52) für das Werkstück (10) sowie mindestens eine Entgratvorrichtung (54) und ein Sensor (56) zum Abtasten der entgrateten Kontur des Werkstücks angeordnet sind. Darauf folgt mindestens eine weitere Bearbeitungsstation (80). Für den Werkstücktransport von Station zu Station ist eine Transporteinrichtung (32) vorgesehen. Aufgrund der Abtastung der Rohkontur des Werkstücks (10) in der Justierstation (20) wird ein vorläufiger Mittelpunkt des Werkstücks (10) als Flächenschwerpunkt der von der Rohkontur umschlossenen Fläche oder als Mittelpunkt einer vorläufigen Hauptachse dieser Fläche berechnet. Beim Umsetzen von der Justierstation (20) zur ersten Bearbeitungsstation (50) wird das Werkstück in bezug auf seinen vorläufigen Mittelpunkt justiert. Sodann wird das Werkstück (10) um den vorläufigen Mittelpunkt gedreht und dabei entgratet. Anschließend wird die entgratete Kontur des Werkstücks (10) abgetastet und ein korrigierter Mittelpunkt des Werkstücks als Flächenschwerpunkt der von der entgrateten Kontur umschlossenen Fläche oder als Mittelpunkt einer korrigierten Hauptachse dieser Fläche berechnet. Beim Umsetzen von der ersten Bearbeitungsstation (50) zur nächsten Bearbeitungsstation (80) wird das Werkstück (10) in bezug auf seinen korrigierten Mittelpunkt zentriert. Schließlich wird das Werkstück (10) um den korrigierten Mittelpunkt gedreht und dabei weiterbearbeitet.

## Beschreibung

Die Erfindung betrifft ein Verfahren zum Entgraten und Weiterbearbeiten von Werkstücken, bei dem Aufspanntoleranzen eines Werkstücks durch berührungsfreies Abtasten des zuvor nur grobzentrierten Werkstücks erkannt und anschließend kompensiert werden, und das Werkstück beim Entgraten und Weiterbearbeiten gedreht wird.

Die Erfindung betrifft ferner eine Anlage zum Durchführen eines solchen Verfahrens mit einer Einrichtung zum berührungsfreien Abtasten des Werkstücks, einer Bearbeitungsstation, in der eine Aufspannvorrichtung für das Werkstück sowie mindestens eine Entgratvorrichtung angeordnet sind, einem Rechner zum Auswerten von durch Abtasten des Werkstücks gewonnenen Signalen, und einer Steuerung für Werksstücktransport und Werksstückbearbeitung.

Ein solches Verfahren und eine solche Anlage sind bekannt aus der DE-Z "Keramische Zeitschrift" 43. Jahrgang Nr. 10, 1991 Seiten 797 bis 800. Dort wird mit einem programmgesteuerten Handhabungsgerät (Roboter) gearbeitet. Aufspanntoleranzen des Werkstücks werden vor dem Beginn der Bearbeitung durch Antasten einiger Referenzpunkte mit Hilfe eines Reflexions-Lichttasters erkannt und durch eine Verschiebung des Koordinaten-Bezugspunktes kompensiert. Während des Entgratens erfolgt eine laufende Messung der Auslenkung eines als Entgratwerkzeug verwendeten Drahtes. Die Daten werden von einem Rechner ausgewertet und in Korrektursignale für die Bahn des Handhabungsgeräts und die Einstellung des Werkzeugs umgesetzt. Die Korrekturwerte werden in der Robotersteuerung gespeichert und beim Verschwammen wieder abgerufen, so daß das Schwammwerkzeug keine zusätzlichen Sensoren benötigt. Ferner sind zur Funktionssicherung Sensoren eingebaut, welche auf Werkzeugbruch und Erreichen der maximalen Auslenkung ansprechen.

In der Praxis hat sich gezeigt, daß bei größeren keramischen Gegenständen, insbesondere ovalen Schüsseln oder Schalen, nach einer Grobzentrierung mit einer Exzentrizität von bis zu 7 cm gerechnet werden muß. Werkzeuge zum Entgraten und Weiterbearbeiten, beispielsweise Verschwammen, des Werkstückrandes müssen deshalb derart gesteuert werden, daß sie sich nicht nur der von einer Kreisform mehr oder weniger stark abweichenden Kontur des Werkstücks anpassen, sondern auch noch die exzentrische Anordnung des Werkstücks in bezug auf dessen Drehachse berücksichtigen. Dafür ist eine aufwendige Steuerung erforderlich, und außerdem hat jedes einzelne Bearbeitungswerkzeug einen Platzbedarf, der mindestens um die größte vorkommende Exzentrizität des Werkstücks größer ist als der Platzbedarf, den das betreffende Werkzeug bei zentrischer Lagerung des Werkstücks haben würde.

Der Erfindung liegt deshalb die Aufgabe zugrunde, ein Verfahren sowie eine Anlage zum Entgraten und Weiterbearbeiten von Werkstücken, insbesondere aus keramischem Material, derart weiterzubilden, daß ein geringerer Steuerungsaufwand erforderlich ist und der Platzbedarf bei gegebener Form und Größe der Werkstücke möglichst gering gehalten wird.

Soweit die Aufgabe das Verfahren betrifft, ist sie erfindungsgemäß ausgehend von einem Verfahren der eingangs beschriebenen Gattung dadurch gelöst, daß
- beim ersten Abtasten eine einen Grat einschließende Rohkontur des Werkstücks abgetastet wird,
- ein vorläufiger Mittelpunkt des Werkstücks als Flächenschwerpunkt der von der Rohkontur umschlossenen Fläche oder als Mittelpunkt einer vorläufigen Hauptachse dieser Fläche berechnet wird,
- das Werkstück in bezug auf seinen vorläufigen Mittelpunkt justiert wird,
- das Werkstück relativ zu einem Entgratwerkzeug um den vorläufigen Mittelpunkt gedreht und dabei entgratet wird,
- beim zweiten Abtasten die entgratete Kontur des Werkstücks abgetastet wird,
- ein korrigierter Mittelpunkt des Werkstücks als Flächenschwerpunkt der von der entgrateten Kontur des Werkstücks umschlossenen Fläche oder als Mittelpunkt einer korrigierten Hauptachse dieser Fläche berechnet wird,
- das Werkstück in bezug auf seinen korrigierten Mittelpunkt zentriert wird und
- das Werkstück relativ zu mindestens einem weiteren Werkzeug um den korrigierten Mittelpunkt gedreht und dabei weiterbearbeitet wird.

Soweit die genannte Aufgabe eine Anlage zum Entgraten und Weiterbearbeiten von Werkstücken betrifft, ist sie erfindungsgemäß ausgehend von einer Anlage der eingangs beschriebenen Gattung dadurch gelöst, daß
- in einer Justierstation zum Grobjustieren jeweils eines Werkstücks in einer Werkstückebene ein Sensor zum Abtasten einer einen Grat einschließenden Rohkontur des Werkstücks angeordnet ist,
- in einer ersten Bearbeitungsstation ein Sensor zum Abtasten der entgrateten Kontur des Werkstücks angeordnet ist,
- der Rechner zum Berechnen eines vom Flächenschwerpunkt der von der Rohkontur umschlossenen Fläche oder vom Mittelpunkt einer vorläufigen Hauptachse dieser Fläche gebildeten vorläufigen Mittelpunkts sowie eines vom Flächenschwerpunkt der von der entgrateten Kontur umschlossenen Fläche oder vom Mittelpunkt einer Hauptachse dieser Fläche gebildeten korrigierten Mittelpunkts des Werkstücks ausgebildet ist, und
- eine parallel sowie im rechten Winkel zur Werkstückebene bewegliche Transporteinrichtung vorgesehen ist, die zum Ansteuern des vorläufigen Mittelpunkts und Erfassen des Werkstücks in der Justierstation, zum Übergeben des Werkstücks in vorläufig justierter Lage an die Aufspannvorrichtung in der ersten Bearbeitungsstation, zum Ansteuern des korrigierten Mittelpunkts und erneuten Erfassen des Werkstücks in der ersten Bearbeitungsstation sowie für den Weitertransport des somit genauer zentrierten Werkstücks ausgebildet ist.

Auf diese Weise gelingt es, auch Werkstücke, deren Rohkontur wegen eines mehr oder weniger breiten und unregelmäßigen Grates stark von der endgültigen Kontur abweicht, derart genau zu zentrieren, daß in der zweiten und jeder folgenden Bearbeitungsstation nicht mehr mit einer die Bearbeitungsgüte beeinflussenden Lageungenauigkeit der Werkstückanordnung gerechnet werden muß. Die Werkzeuge in der zweiten und jeder folgenden Bearbeitungsstation brauchen deshalb nur so gesteuert zu werden, daß sie der Sollkontur der Werkstücke folgen. Dadurch vereinfacht sich der Steuerungsaufwand und verringert sich der Platzbedarf für die erforderlichen Bewegungen der Werkzeuge.

Zur Erläuterung des Begriffs Hauptachse sei erwähnt, daß Werkstückkonturen der hier in Betracht kommenden Art meist mehr als nur eine Hauptachse haben. So hat z.B. eine elliptische oder ovale Werkstückkontur eine große Hauptachse, deren Länge den größten Durchmesser der Kontur darstellt, sowie eine kleine Hauptachse, deren Länge den kleinsten Durchmesser der Kontur darstellt. Als Mittelpunkt einer Hauptachse ist derjenige Punkt zu verstehen, der von den beiden Schnittpunkten der betreffenden Hauptachse mit der Werkstückkontur gleich weit entfernt ist.

Vorteilhafte Weiterbildungen der erfindungsgemäßen Anlage ergeben sich aus den Unteransprüchen.

Ein Ausführungsbeispiel der Erfindung wird im folgenden anhand schematischer Zeichnungen mit weiteren Einzelheiten beschrieben.
- Fig. 1: ist die Draufsicht einer Anlage zum Entgraten und Weiterbearbeiten keramischer Werkstücke, und
- Fig. 2: ist die Vorderansicht der Anlage in Richtung des Pfeils II in Fig. 1.

Die dargestellte Anlage ist zum Beseitigen eines Preßgrats sowie zum Durchführen weiterer Arbeitsgänge wie Verschwammen und dergleichen an Werkstücken 10 vorgesehen, die in einer nur angedeuteten Presse 12 üblicher Bauart aus pulverförmigem keramischem Material gepreßt worden sind. Die Werkstücke 10 haben eine im dargestellten Beispiel elliptische Sollkontur, von der ein Preßgrat mehr oder weniger weit radial nach außen ragt, so daß die frisch gepreßten Werkstücke eine von der Sollkontur in unregelmäßiger Weise abweichende Rohkontur aufweisen. Die Werkstücke 10 fallen aus der Presse 12 nacheinander auf ein Förderband 14, das auf einem von der Presse 12 wegragenden Tragarm 16 geführt ist und die Werkstücke 10 zwischen zwei am Tragarm 16 einstellbar befestigten, konvergierenden Leisten 18 hindurchbewegt. Dadurch wird jedes Werkstück 10 annähernd in Richtung der Hauptachse seiner elliptischen Sollkontur ausgerichtet und grobjustiert, ehe es von einem nicht dargestellten Anschlag oder dergleichen in einer Justierstation 20 angehalten wird. Die Justierstation 20 definiert eine waagerechte Werkstückebene 22, auf die im folgenden weitere Bewegungen der Werkstücke 10 bezogen werden.

Zur dargestellten Anlage gehört ferner ein portalartiges Gestell 24; an diesem ist in der Justierstation 20, senkrecht oberhalb des dort stehenden Werkstücks 10, ein erster optoelektronischer Sensor 26 mit Blickrichtung senkrecht nach unten befestigt. Der Sensor 26 tastet die Rohkontur des unter ihm stehenden Werkstücks 10 ab und gibt entsprechende Signale an einen Rechner 28 ab, der eine Steuerung 30 mit Daten beliefert.

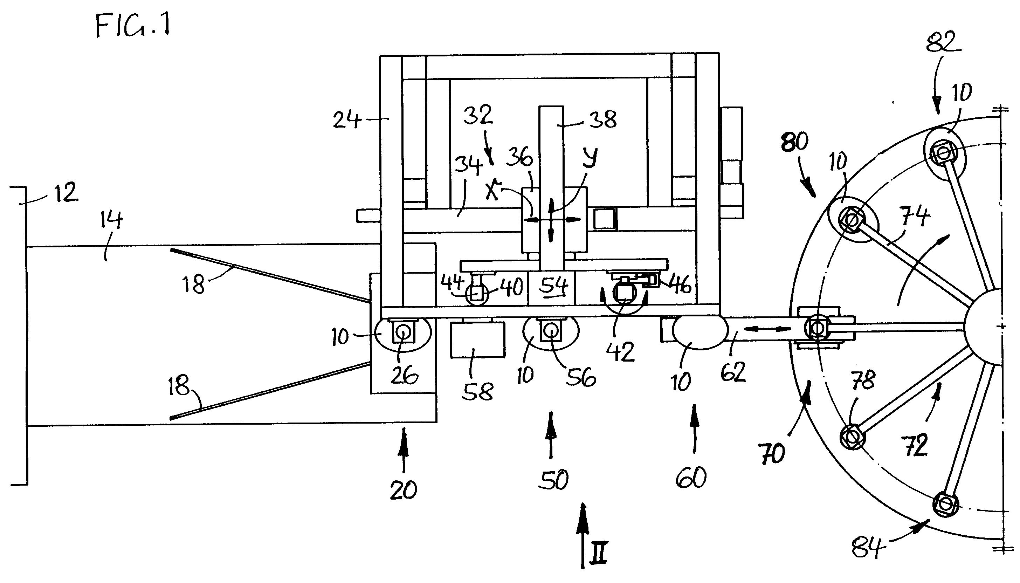

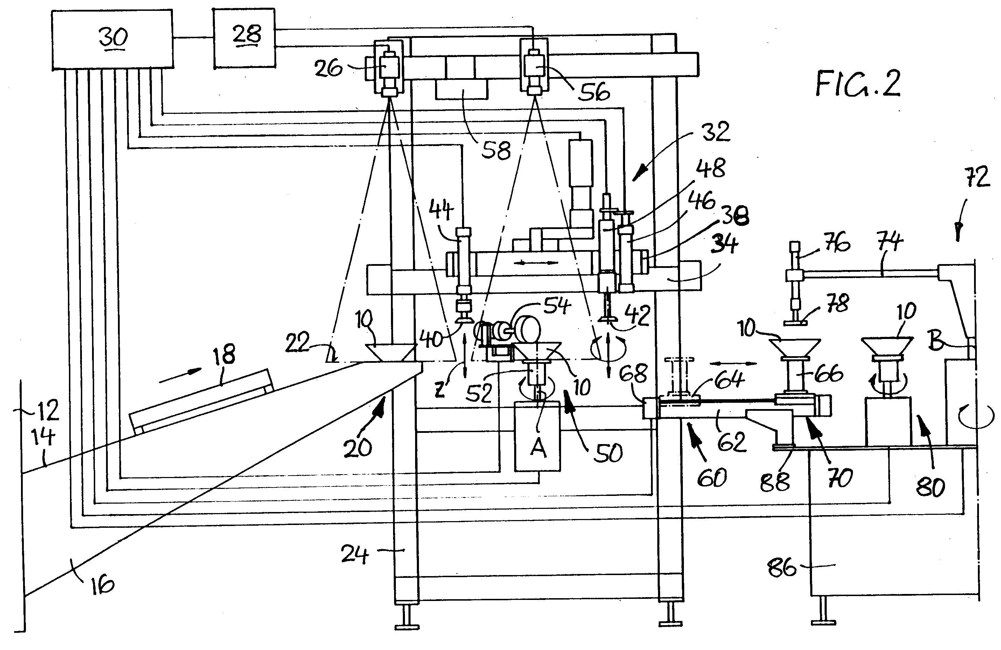

Das Gestell 24 trägt eine Transporteinrichtung 32 mit einer höheneinstellbaren waagerechten Führung 34, auf der ein Schlitten 36 in Richtung des Doppelpfeils X in Fig. 1 und 2, also in Längsrichtung der Anlage, numerisch gesteuert hin- und herbewegbar ist. Auf dem Schlitten 36 ist ein Schlitten 38 in Richtung des Doppelpfeils Y in Fig. 1, also quer zur Längsrichtung der Anlage, ebenfalls numerisch gesteuert hin- und herbewegbar. Die beiden Schlitten 36 und 38 bilden eine von der Steuerung 30 abhängige Kreuzschlittenanordnung. Am Schlitten 38 sind zwei Sauger 40 und 42 in X-Richtung hintereinander angeordnet. Jeder der Sauger 40 und 42 ist unabhängig von dem anderen mittels einer ebenfalls von der Steuerung 30 gesteuerten Hubvorrichtung 44 bzw. 46 senkrecht zur Werkstückebene 22 in Richtung des Doppelpfeils Z in Fig. 2 zum Erfassen, Anheben und Absenken je eines Werkstücks 10 heb- und senkbar. Die Sauger 40, 42 sind mittels ebenfalls von der Steuerung 30 gesteuerter Drehantriebe inkremental drehbar.

Die Bewegungen der Schlitten 36 und 38 in X- bzw. Y-Richtung sind derart gesteuert, daß der erste Sauger 40 zwischen der Justierstation 20 und einer ersten Bearbeitungsstation 50 hin- und herbewegbar ist. In der ersten Bearbeitungsstation 50 ist eine Aufspannvorrichtung 52 angeordnet, die einen Sauger zum Ansaugen der Werkstücksunterseite aufweist und, ebenfalls von der Steuerung 30 gesteuert, um eine ortsfeste senkrechte Achse A drehantreibbar ist. Ferner ist in der ersten Bearbeitungsstation 50 eine Entgratvorrichtung 54 angeordnet, die ebenfalls von der Steuerung 30 gesteuert ist und von üblicher Bauart sein kann, beispielsweise mit einer drehantreibbaren starren Rolle auf einer Welle, die sich radial zur senkrechten Drehachse der Aufspannvorrichtung 52 erstreckt, entsprechend der Werkstückkontur radial hin- und herbewegbar und außerdem, beispielsweise durch Schwenken um eine waagerechte Achse, heb- und senkbar ist.

Senkrecht über der Aufspannvorrichtung 52 ist in der ersten Bearbeitungsstation 50 am Gestell 54 ein zweiter optoelektronischer Sensor 56, ebenfalls mit Blickrichtung senkrecht nach unten, befestigt. Zwischen den beiden Sensoren 26 und 56 ist am Gestell 24 eine Lichtquelle 58, beispielsweise ein Infrarotstrahler, derart angeordnet, daß er in die Justierstation 20 und in die erste Bearbeitungsstation 50 strahlt.

Von der Justierstation 20 aus gesehen jenseits der ersten Bearbeitungsstation 50 ist in einem Endbereich des Gestells 24 eine erste Übergabestation 60 angeordnet. Von dort erstreckt sich in X-Richtung eine Führung 62 weg, auf der ein Schlitten 64 geführt ist. Der Schlitten 64 trägt einen Werkstückhalter 66, der ebenfalls einen an der Werkstückunterseite angreifenden Sauger aufweisen kann. Mittels eines ebenfalls von der Steuerung 30 gesteuerten Antriebs 68, beispielsweise in Form einer pneumatischen Kolbenzylindereinheit, ist der Schlitten 64 längs der Führung 62 zwischen der ersten Übergabestation 60 und einer zweiten Übergabestation 70 hin- und herbewegbar.

Die zweite Übergabestation 70 liegt im Arbeitsbereich eines Armsterns 72 mit im dargestellten Beispiel zehn Armen 74, die je eine Hubvorrichtung 76 mit einem Sauger 80 tragen und gemeinsam schrittweise, im Beispiel um jeweils 36°, um eine zentrale senkrechte Achse B drehbar sind. Auf diese Weise bewegt sich jeweils einer der Sauger 78 auf einem Kreisbogen von der Übergabestation 70 in eine zweite Bearbeitungsstation 80, und beim nächsten Schritt weiter in eine dritte Bearbeitungsstation 82 und so weiter, um schließlich eine Entnahmestation 84 zu erreichen. Der Armstern 72 ist in einem Gestell 86 gelagert, das eine Tischplatte 88 zur Befestigung von Bearbeitungsvorrichtungen der in der Keramikindustrie üblichen Bauart aufweist.

Die beschriebene Anlage arbeitet folgendermaßen:
Der Sensor 26 liefert dem Rechner 28 Signale entsprechend der Rohkontur des in der Justierstation 20 stehenden Werkstücks 10. Daraus berechnet der Rechner 28 den Schwerpunkt der von der Rohkontur umschlossenen Fläche oder den Mittelpunkt einer Hauptachse dieser Fläche. Dieser Punkt wird von der Steuerung 30 als vorläufiger Mittelpunkt des in der Justierstation 20 stehenden Werkstücks 10 gewertet, und dementsprechend wird die Transporteinrichtung 32 derart gesteuert, daß der Sensor 26 dieses Werkstück in bezug auf seinen vorläufigen Mittelpunkt zentrisch erfaßt. Sodann wird der Sauger 40 samt dem Werkstück 10 mittels der Hubvorrichtung 44 angehoben und durch Bewegung des Schlittens 36 in X-Richtung sowie erforderlichenfalls des Schlittens 38 in Y-Richtung und gegebenenfalls durch Rotation des Saugers 40 und schließlich durch Absenken der Hubvorrichtung 44 auf der Aufspannvorrichtung 52 derart abgesetzt, daß der vorläufige Mittelpunkt des Werkstücks 10 auf der Drehachse A der Aufspannvorrichtung 52, und die genannte Hauptachse in einer vorgegebenen Richtung liegt.

Anschließend wird die Entgratvorrichtung 54 in Tätigkeit gesetzt, während die Aufspannvorrichtung 52 sich mit dem von ihr festgehaltenen Werkstück 10 dreht. Sobald das Werkstück 10 auf diese Weise entgratet worden ist, wird seine Kontur vom Sensor 56 festgestellt und in Form entsprechender Signale an den Rechner 28 übermittelt, der daraufhin einen korrigierten Mittelpunkt des entgrateten Werkstücks 10 als Schwerpunkt der von seiner Kontur umschlossenen Fläche oder als Mittelpunkt von deren Hauptachse errechnet.

Die Transporteinrichtung 32 wird in ihre Ausgangsstellung zurückbewegt, dabei jedoch so gesteuert, daß der Sauger 40 den inzwischen ermittelten vorläufigen Mittelpunkt des nächsten in der Justierstation 20 stehenden Werkstücks 10 erreicht, dieses erfaßt und anhebt. Sodann wird die Transporteinrichtung 32 so bewegt, daß ihr zweiter Sauger 42 den korrigierten Mittelpunkt des noch in der ersten Bearbeitungsstation 50 stehenden entgrateten Werkstücks ansteuert, dieses erfaßt und anhebt. Soweit erforderlich, wird der zweite Sauger 42 samt dem nun an ihm hängenden entgrateten Werkstück 10 mittels des Drehantriebs 48 derart gedreht, daß sich die Hauptachse der Kontur dieses Werkstücks in eine vorgegebene Richtung einstellt.

Gleichzeitig oder unmittelbar danach wird die Transporteinrichtung 32 in X-Richtung bewegt, sodaß der zweite Sauger 42 samt daran hängendem entgratetem Werkstück 10 die erste Übergabestation 60 erreicht, wo dieses Werkstück an den Werkstückhalter 66 übergeben wird. Anschließend wird der erste Sauger 40 samt dem an ihm hängenden Werkstück 10, das aus der Justierstation 20 kommt und noch nicht entgratet ist, derart gesteuert, daß der vorläufige Mittelpunkt dieses Werkstücks auf der Drehachse A der Aufspannvorrichtung 52 liegt. Nötigenfalls wird das Werkstück 10 dabei mittels des Drehantriebs des ersten Saugers 40 so gedreht, daß eine bestimmte Hauptachse des Werkstücks eine vorgegebene Richtung einnimmt; anschließend wird das Werkstück an diese Aufspannvorrichtung 52 übergeben.

Währenddessen wird der Werkstückhalter 66 mit dem auf ihm zentrierten, zuvor entgrateten Werkstück 10 von der ersten Übergabestation 60 zur zweiten Übergabestation 70 bewegt. Dort wird das entgratete Werkstück 10 von dem Sauger 78 an einem der Arme 74 des Armsterns 72 erfaßt und schrittweise zur Weiterbearbeitung durch die Bearbeitungsstationen 80, 82 usw. sowie schließlich zur Entnahmestation 84 gefördert. Bis dahin bleibt das entgratete Werkstück 10 ständig in bezug auf seinen korrigierten Mittelpunkt zentriert und auf seine korrigierte Hauptachse justiert, sodaß es in den Bearbeitungsstationen 80, 82 usw. mit hoher Genauigkeit weiterbearbeitet werden kann.

## Patentansprüche

1. Verfahren zum Entgraten und Weiterbearbeiten von Werkstücken, bei dem Aufspanntoleranzen eines Werkstücks vor dem Beginn der Bearbeitung durch berührungsfreies Abtasten des zuvor nur grob zentrierten Werkstücks erkannt und anschließend kompensiert werden, und das Werkstück beim Entgraten und Weiterbearbeiten gedreht wird,
dadurch **gekennzeichnet,** daß
- beim ersten Abtasten eine einen Grat einschließende Rohkontur des Werkstücks abgetastet wird,
- ein vorläufiger Mittelpunkt des Werkstücks als Flächenschwerpunkt der von der Rohkontur umschlossenen Fläche oder als Mittelpunkt einer vorläufigen Hauptachse dieser Fläche berechnet wird,
- das Werkstück in bezug auf seinen vorläufigen Mittelpunkt justiert wird,
- das Werkstück relativ zu einem Entgratwerkzeug um den vorläufigen Mittelpunkt gedreht und dabei entgratet wird,
- beim zweiten Abtasten die entgratete Kontur des Werkstücks abgetastet wird,
- ein korrigierter Mittelpunkt des Werkstücks als Flächenschwerpunkt der von der entgrateten Kontur des Werkstücks umschlossenen Fläche oder als Mittelpunkt einer korrigierten Hauptachse dieser Fläche berechnet wird,
- das Werkstück in bezug auf seinen korrigierten Mittelpunkt zentriert wird, und
- das Werkstück relativ zu mindestens einem weiteren Werkzeug um den korrigierten Mittelpunkt gedreht und dabei weiterbearbeitet wird.

2. Anlage zum Entgraten und Weiterbearbeiten von Werkstücken mit
- einer Einrichtung zum berührungsfreien Abtasten des Werkstücks (10),
- einer Bearbeitungsstation (50), in der eine Aufspannvorrichtung (52) für das Werkstück (10) sowie mindestens eine Entgratvorrichtung (54) angeordnet sind,
- einem Rechner (28) zum Auswerten von durch Abtasten des Werkstücks (10) gewonnenen Signalen, und
- einer Steuerung (30) für die Werkstückbearbeitung,
dadurch **gekennzeichnet,** daß
- in einer Justierstation (20) zum Grobjustieren jeweils eines Werkstücks (10) in einer Werkstückebene (22), ein Sensor (26) zum Abtasten einer einen Grat einschließenden Rohkontur des Werkstücks (10) angeordnet ist,
- in einer ersten Bearbeitungsstation (50) ein Sensor (56) zum Abtasten der entgrateten Kontur des Werkstücks (10) angeordnet ist,
- der Rechner (28) zum Berechnen eines vom Flächenschwerpunkt der von der Rohkontur umschlossenen Fläche oder vom Mittelpunkt einer Hauptachse dieser Fläche gebildeten vorläufigen Mittelpunkts sowie eines vom Flächenschwerpunkt der von der entgrateten Kontur umschlossenen Fläche oder vom Mittelpunkt einer Hauptachse dieser Fläche gebildeten korrigierten Mittelpunkts des Werkstücks (10) ausgebildet ist, und
- eine parallel sowie im rechten Winkel zur Werkstückebene (22) bewegliche Transporteinrichtung (32) vorgesehen ist, die zum Ansteuern des vorläufigen Mittelpunkts und Erfassen des Werkstücks (10) in der Justierstation (20), zum Übergeben des Werkstücks (10) in vorläufig justierter Lage an die Aufspannvorrichtung (52) in der ersten Bearbeitungsstation (50), zum Ansteuern des korrigierten Mittelpunkts und erneuten Erfassen des Werkstücks (10) in der ersten Bearbeitungsstation (50) sowie für den Weitertransport des somit genauer zentrierten Werkstücks (10) ausgebildet ist.

3. Anlage nach Anspruch 2,
dadurch **gekennzeichnet,** daß die Transporteinrichtung (32) einen zwischen der Justierstation (20) und der ersten Bearbeitungsstation (50) hin- und herbewegbaren ersten Sauger (40) sowie einen zwischen der ersten Bearbeitungsstation (50) und einer weiteren Station (60) hin- und herbewegbaren zweiten Sauger (42) aufweist.

4. Anlage nach Anspruch 3,
dadurch **gekennzeichnet,** daß die beiden Sauger (40, 42) in festem Abstand voneinander an einem Schlitten (38) einer parallel zur Werkstückebene (22) in zwei Koordinatenrichtungen (X, Y) bewegbaren Kreuzschlittenanordnung (36, 38) angeordnet sind.

5. Anlage nach Anspruch 4,
dadurch **gekennzeichnet,** daß die beiden Sauger (40, 42) unabhängig voneinander höhenverstellbar sind.

6. Anlage nach einem der Ansprüche 3 bis 5,
dadurch **gekennzeichnet,** daß der Rechner (28) zum Berechnen der Lage mindestens einer gewählten Hauptachse des entgrateten Werkstücks (10) ausgebildet ist und die Sauger (40, 42) derart gesteuert drehantreibbar sind, daß jeder von ihnen die gewählte Hauptachse des von ihm erfaßten Werkstücks (10) in eine vorgegebene Richtung einstellt.

7. Anlage nach einem der Ansprüche 3 bis 6,
dadurch **gekennzeichnet,** daß die beiden Sauger (40, 42) von oben her auf je ein Werkstück (10) absenkbar sind und die Aufspannvorrichtung (52) in der ersten Bearbeitungsstation (50) zum Ansaugen der Unterseite jeweils eines Werkstücks (10) ausgebildet ist.
